# EUROPÄISCHE PATENTSCHRIFT

(11) **EP 2 873 901 B1**
(45) Veröffentlichungstag und Bekanntmachung des Hinweises auf die Patenterteilung: **03.01.2018**
(21) Anmeldenummer: 13306563.1
(22) Anmeldetag: 15.11.2013
(51) Int. Cl.: F16L 59/065, F16L 59/14, F16L 59/153, F16L 11/15, F16L 11/20, H01B 12/14

(54) **Flexible Rohrleitung**
Flexible conduit
Conduite flexible

(43) Veröffentlichungstag der Anmeldung: 20.05.2015
(73) Patentinhaber: Nexans, 92400 Courbevoie (FR)
(72) Erfinder: Dr. Soika, Rainer, 30559 Hannover (DE); Lange, Stephan, 30900 Wedemark (DE)
(74) Vertreter: Döring, Roger

(56) Entgegenhaltungen:
- EP-A1- 2 339 593
- EP-A1- 2 410 223
- US-A- 3 595 275
- US-A- 4 570 678
- US-B1- 6 607 010

## Beschreibung

Die Erfindung bezieht sich auf eine flexible Rohrleitung gemäß dem Oberbegriff des Patentanspruchs 1.

Eine solche Rohrleitung geht beispielsweise aus der EP 2 253 878 B1 hervor.

Eine derartige Rohrleitung wird beispielsweise zur Versorgung von supraleitfähigen Magnetsystemen oder Kryopumpen mit einem Kühlmedium benötigt. Sie soll flexibel sein und gegebenenfalls auch eine größere Länge haben. Zur Überbrückung derselben muß das Kühlmedium mit erhöhtem Druck in dem Innenrohr transportiert werden. Das gilt auch für andere Medien, wie beispielsweise Wasser. Der erhöhte Druck des jeweiligen Mediums, beispielsweise ab 25 bar, kann leicht zu einer plastischen Verformung des Innenrohres und dadurch bedingt zu einer Auslenkung desselben aus seiner zentrischen Lage führen. Die Wirkung der Vakuumisolierung wird durch eine solche plastische Verformung auf Dauer verschlechtert.

In der US-B-6,607,010 ist ein vakuumdichtes, ringförmig gewelltes Rohr aus Kunststoff oder Metall beschrieben, das zu seiner Stabilisierung mit einem Geflecht ausgekleidet ist, welches an beiden Enden des Rohres an demselben befestigt ist. Zum Schutz des Rohres und zu seiner Verwendung als Druckrohr kann auch außen um dasselbe herum ein sich über die ganze Länge des Rohres erstreckendes Geflecht angebracht sein. Auch dieses Geflecht ist an beiden Enden des Rohres an demselben befestigt.

Die zum Transport eines tiefgekühlten Mediums dienende Rohrleitung nach der eingangs erwähnten EP 2 253 878 B1 weist den geschilderten Mangel nicht auf. Über dem Innenrohr dieser bekannten Rohrleitung ist ein zweites Rohrsystem angeordnet, das aus einem inneren, quer zu seiner Längsrichtung gewellten metallischen Rohr und einem mit Abstand und koaxial zu demselben angeordneten äußeren, ebenfalls quer zu seiner Längsrichtung gewellten Rohr besteht. Die Vakuumisolierung und das Außenrohr der Rohrleitung liegen über dem äußeren Rohr des zweiten Rohrsystems. Das innere Rohr des zweiten Rohrsystems ist räumlich dicht am Innenrohr der Rohrleitung angeordnet und hält dasselbe unter Zwischenschaltung einer Abstandshalterung aus Isoliermaterial unverrückbar in seiner relativen Position innerhalb der Rohrleitung. Diese bekannte Rohrleitung hat sich in der Praxis bewährt. Sie ist aber aufwendig aufgebaut.

Der Erfindung liegt die Aufgabe zugrunde, die eingangs beschriebene Rohrleitung unter Beibehaltung einer stabilen relativen Lage des Innenrohrs einfacher zu gestalten.

Diese Aufgabe wird entsprechend den kennzeichnenden Merkmalen des Patentanspruchs 1 gelöst.

Diese Rohrleitung ist sehr einfach und ohne aufwendige Zusatzteile aufgebaut. Sie hat als zusätzliches Element nur die das Innenrohr umgebende und mit demselben an seinen Enden fest verbundene Armierung aus zugfesten Strängen, die in mindestens zwei Lagen mit entgegengesetzter Schlagrichtung übereinander liegend, wendelförmig um das Innenrohr herumgewickelt sind. Bei Aufbau der Rohrleitung wird nach Fertigstellung des Innenrohrs zunächst die Armierung auf dasselbe aufgebracht und mit seinen beiden axialen Enden mechanisch fest verbunden. Am sonstigen Aufbau der Rohrleitung braucht gegenüber dem bekannten Aufbau einer solchen Rohrleitung nichts mehr geändert zu werden. Es wird in herkömmlicher Weise eine Isolierung mit Abstandshalterung auf das Innenrohr bzw. die dasselbe umgebende Armierung aufgebracht, um welche das Außenrohr herumgeformt wird. Weil die Armierung an beiden Enden des Innenrohrs fest mit demselben verbunden ist, können sich auch höhere Drücke des zu transportierenden Mediums nicht mechanisch auf das Innenrohr auswirken. Es behält sowohl seine Länge als auch seine zentrische Lage im Außenrohr stabil bei.

Ein Ausführungsbeispiel des Erfindungsgegenstandes ist in den Zeichnungen dargestellt.

Es zeigen:
Fig. 1 in schematischer Darstellung eine Rohrleitung mit zwei quer zu ihrer Längsrichtung gewellten Rohren.
Fig. 2 einen Schnitt durch Fig. 1 längs der Linie II - II.
Fig. 3 ebenfalls schematisch das Innenrohr einer Rohrleitung mit Armierung.
Fig. 4 einen Ausschnitt vom Querschnitt einer Rohrleitung nach der Erfindung in vergrößerter Darstellung.

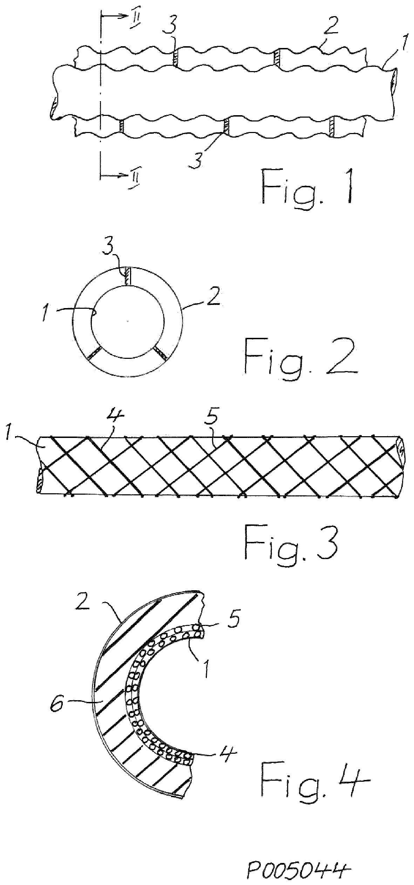

In Fig. 1 sind schematisch zwei aus Metall bestehende, konzentrisch zueinander angeordnete Rohre 1 und 2 einer Rohrleitung dargestellt, die zum Transport eines unter Druck stehenden, fließfähigen Mediums dient. Das Medium ist in bevorzugter Ausführungsform tiefgekühlt. Die Rohre 1 und 2 sind im dargestellten Ausführungsbeispiel durch eine ebenfalls nur schematisch angedeutete Abstandshalterung 3 auf Abstand zueinander gehalten. Beide Rohre 1 und 2 sind quer zu ihrer Längsrichtung gewellt, und zwar entweder wendelförmig oder ringförmig. Sie sind dadurch einerseits gut biegbar und andererseits in radialer Richtung stabiler. Beide Rohre 1 und 2 bestehen mit Vorteil aus Edelstahl. Das Rohr 1 wird im Folgenden als "Innenrohr 1" bezeichnet, während das Rohr 2 das "Außenrohr 2" der Rohrleitung ist.

Bedingt durch die Wellenform könnte das Innenrohr 1 bei Einwirkung von erhöhtem Druck durch das in demselben geführte Medium gedehnt und damit länger werden und auch aus seiner zentrischen Lage im Außenrohr 2 verschoben werden. Um das in engen Grenzen auszuschließen, ist um das Innenrohr 1 herum eine Armierung angebracht, die in der Ausführungsform nach Fig. 3 aus zwei zugfesten Strängen 4 und 5 besteht. Das Innenrohr 1 ist in Fig. 3 der Einfachheit und Übersichtlichkeit halber als glattes Rohr dargestellt. Die beiden Stränge 4 und 5 sind in zwei Lagen übereinander liegend mit entgegengesetzter Schlagrichtung, wendelförmig um das Innenrohr 1 herumgewickelt. Sie sind an beiden Enden des Innenrohrs 1 fest mit demselben verbunden, so daß das Innenrohr 1 auch bei erhöhtem Druck in seinem Inneren sich nicht ausdehnen kann.

Die zwei mit entgegengesetzter Schlagrichtung auf das Innenrohr 1 aufgewickelten Stränge 4 und 5 bilden wegen der entgegengesetzten Wickelrichtung gleichzeitig einen Torsionsschutz für das Innenrohr 1. In diesem Sinne könnten auch mehr als zwei Lagen von Strängen mit jeweils zwei in entgegengesetzter Richtung gewickelten Strängen auf das Innenrohr 1 aufgebracht sein.

Die Stränge 4 und 5 bestehen mit Vorteil aus Edelstahl. Es sind aber grundsätzlich auch andere, zugfeste Materialien einsetzbar. Sie können als Bänder ausgeführt sein. In bevorzugter Ausführungsform sind die Stränge 4 und 5 als Seile ausgebildet, die in bekannter Technik mit relativ kleinem Durchmesser hergestellt werden können.

Zur Fertigstellung der Rohrleitung nach der Erfindung wird beispielsweise wie folgt vorgegangen:

Es werden zunächst die beiden zugfesten Stränge 4 und 5 um das vorgefertigte Innenrohr 1 herumgewickelt und an beiden Enden desselben fest mit dem Innenrohr 1 verbunden. Danach werden gegebenenfalls die Abstandshalterung 3 und ein der thermischen Isolierung 6 dienendes Material auf das Innenrohr 1 bzw. die beiden Lagen mit den zugfesten Strängen 4 und 5 aufgebracht. Um die thermische Isolierung 6 und die Abstandshalterung 3 wird danach das Außenrohr 2 herumgeformt. Abschließend wird der Ringspalt zwischen Innenrohr 1 und Außenrohr 2 evakuiert, so daß zwischen den beiden Rohren eine Vakuumisolierung vorhanden ist, welche das Innere der Rohrleitung gegenüber einem Wärmeeinfall von außen schützt.

## Patentansprüche

1. Flexible Rohrleitung zum Transport eines unter Druck stehenden, fließfähigen Mediums, welche aus zwei quer zu ihrer Längsrichtung gewellten Rohren aus Metall besteht, einem Innenrohr (1) und einem Außenrohr (2), die unter Einschluß eines Ringspalts mit Abstand konzentrisch zueinander angeordnet sind, und bei welcher in dem Ringspalt zwischen den beiden Rohren eine Vakuumisolierung angebracht ist, **dadurch gekennzeichnet,**
- **daß** außen auf dem Innenrohr (1) eine zugfeste Armierung aufgebracht ist, die an beiden Enden des Innenrohrs (1) fest mit demselben verbunden ist, und
- **daß** die Armierung aus zugfesten Strängen (4,5) besteht, die, in mindestens
zwei Lagen mit entgegengesetzter Schlagrichtung übereinander liegend, wendelförmig um das Innenrohr (1) herumgewickelt sind.

2. Rohrleitung nach Anspruch 1, **dadurch gekennzeichnet, daß** die Stränge (4,5) aus Edelstahl bestehen.

## Claims

1. Flexible pipeline for transporting a pressurized flowable medium, comprising two pipes of metal which are corrugated transversely to their longitudinal direction, an inner pipe (1) and an outer pipe (2) which are arranged at a distance concentrically and relative to each other so a to form an annular gap, and wherein a vacuum insulation is arranged in the annular gap between the two pipes, **characterized in**
- **that** on the outside of the innerpipe (1) a tension pro of reinforcement is mounted which is fixedly connected at both ends to the innerpipe (1), and
- **that** the reinforcement consists of tension pro of strands (4,5) which are wound helically in at least two layers with different directions of lay one above the other around the innerpipe (1).

2. Flexible pipeline according to claim 1, **characterized in that** the strands (4,5) consist of stainless steel.

## Revendications

1. Conduite tubulaire flexible pour le transport d'un milieu s'écoulant sous pression, qui se compose de deux tubes en métal soudés transversalement à leur direction longitudinale, un tube intérieur (1) et un tube extérieur (2), qui sont disposés concentriquement à distance l'un de l'autre en créant une fente annulaire, et dans laquelle une isolation sous vide est réalisée dans la fente annulaire entre les deux tubes, **caractérisée en ce**
- **que** à l'extérieur sur le tube intérieur (1) est appliquée une armature résistant à la traction, qui est raccordée fixement aux deux extrémités du tube intérieur (1) à ce dernier, et
- **que** l'armature se compose de tronçons résistant à la traction (4, 5) qui sont enroulés en forme d'hélice autour du tube intérieur (1) en étant disposés l'un au-dessus de l'autre en au moins deux couches avec des sens d'enroulement opposés.

2. Conduite tubulaire selon la revendication 1, **caractérisée en ce que** les tronçons (4, 5) se composent d'acier inoxydable.
